# EUROPÄISCHE PATENTSCHRIFT

(11) **EP 1 280 680 B1**
(45) Veröffentlichungstag und Bekanntmachung des Hinweises auf die Patenterteilung: **02.08.2006**
(21) Anmeldenummer: 01942974.5
(22) Anmeldetag: 27.04.2001
(51) Int. Cl.: B60Q 3/04

(54) **ANZEIGEVORRICHTUNG**
DISPLAY DEVICE
DISPOSITIF D'AFFICHAGE

(30) Priorität: 02.05.2000 DE 10021101
(43) Veröffentlichungstag der Anmeldung: 05.02.2003
(73) Patentinhaber: ROBERT BOSCH GMBH, 70442 Stuttgart (DE)
(72) Erfinder: MEROTH, Ansgar, 71229 Leonberg-Gebersheim (DE)
(86) Internationale Anmeldenummer: PCT/DE2001/001589
(87) Internationale Veröffentlichungsnummer: WO 2001/083263

(56) Entgegenhaltungen:
- EP-A- 0 853 015
- DE-A- 19 800 202
- US-A- 5 084 698
- US-A- 5 510 776

## Beschreibung

### Stand der Technik

Die Erfindung geht aus von einer Anzeigevorrichtung nach der Gattung des Hauptanspruchs. Es sind schon Anzeigevorrichtungen in Fahrzeugen bekannt, die über verschiedenfarbige Lichtquellen beleuchtbar sind. Z.B. dienen rote Lichtquellen zur Beleuchtung von Warnanzeigen, während weißes oder grünes Licht zur Beleuchtung von Zeigeranzeigen verwendet wird. Anzeigevorrichtungen dienen z.B. der Anzeige von Fahrtparametern, wie z.B. der Fahrzeuggeschwindigkeit, der Motordrehzahl, des Tankfüllstands oder einer Außentemperatur. Derartige Anzeigevorrichtungen werden ebenfalls für eine Autoradiovorrichtung, für eine Navigationsvorrichtung oder einen Bordcomputer verwendet. Ferner ist bekannt, dass die Anzeigevorrichtungen über eine Fotodiode oder einen Fototransistor eine Umgebungshelligkeit messen und die Helligkeit einer Anzeige der Anzeigevorrichtung mittels einer automatischen Anpassung in Abhängigkeit von der Umgebungshelligkeit geregelt wird. Ferner ist eine Anzeigenhelligkeit manuell durch einen Benutzer einstellbar. Die Farbe der Anzeige bleibt hierbei jedoch stets gleich. Ferner ist es bekannt, vor Fahrzeugdefekten bzw. gefährlichen Fahrzeugsituationen mittels farbigen Warnleuchten zu warnen.

EP 0 853 015 offenbart eine Anzeigevorrichtung mit einer Flüssigkristallzelle, einer Steuereinheit zum Auswerten eines Fahrtparameters und zum Ansteuern der verschiedenfarbigen Lichtquellen, und einer Recheneinheit.

### Vorteile der Erfindung

Die erfindungsgemäße Anzeigevorrichtung mit den Merkmalen des Hauptanspruchs hat demgegenüber den Vorteil, dass die verschiedenfarbigen Lichtquellen von einem Steuergerät ansteuerbar sind, über das mindestens ein Fahrtparameter des Fahrzeugs erfassbar und auswertbar ist, so dass eine Helligkeit der verschiedenfarbigen Lichtquellen in Abhängigkeit von dem Fahrtparameter durch das Steuergerät veränderbar ist. Hierdurch kann der Farbeindruck eines Benutzers von der Anzeige der Anzeigevorrichtung verändert und damit das Fahrverhalten des Fahrers beeinflusst werden. Durch eine kontinuierliche, sukzessive Farbänderung der Anzeige kann ein Fahrer in möglicherweise kritischen Situationen suggestiv gewarnt werden, ohne dass z.B. durch das Aufleuchten einer Warnlampe eine schreckhafte Reaktion des Fahrers hervorgerufen wird. Fällt z.B. die Außentemperatur des Fahrzeugs unter den Gefrierpunkt und leuchtet eine diesbezügliche Warnleuchte auf, so kann dies dazu führen, dass ein Fahrer unvermutet die Bremse betätigt und das Fahrzeug hierdurch ins Schleudern gerät. Durch eine insbesondere langsame Änderung der Beleuchtungsfarbe bei fallenden Temperaturen statt, so kann sich ein Fahrer ohne zu Erschrecken auf eine vorsichtige Fahrweise einstellen.

Durch die in den Unteransprüchen äufgeführten Maßnahmen sind vorteilhafte Weiterbildungen und Verbesserungen der im Hauptanspruch angegebenen Anzeigevorrichtung möglich. Besonders vorteilhaft ist, dass die Anzeigevorrichtung als eine Flüssigkristallanzeige ausgeführt ist. Im Gegensatz zu einer Änderung der Bilddarstellung z.B. in einer Flüssigkristallanzeige ist für eine Änderung lediglich der Beleuchtungsfarbe keine Neuberechnung des in der Flüssigkristallanzeige angezeigten Bildes erforderlich, wodurch der Rechenaufwand bei einer fahrtparameterabhängigen Farbdarstellung verringert wird. Die Änderung der Hinterleuchtungsfarbe der Flüssigkristallanzeige wird zudem für die Änderung bereits die gesamte Anzeige erfassen, ohne einzelne Bildteile getrennt berechnen zu müssen.

Weiterhin ist vorteilhaft, in einer Speichereinheit ein grafisches Muster in Datenform abzulegen, so dass zusätzlich zu der Farbänderung die Darstellung in der Anzeigeeinheit mit dem grafischen Muster hinterlegbar ist, und hierdurch zusätzlich zu der Farbänderung ein Benutzer durch das eingeblendete grafische Muster auf eine mögliche Gefahr, z.B. Eisbildung, hingewiesen wird.

Besonders vorteilhaft ist, dass nur die Farbe außerhalb eines Bereiches von in der Anzeigevorrichtung angeordneten Zifferblattanzeigen verändert wird, um die Ablesbarkeit der Zifferblattanzeige nicht zu beeinflussen. Dabei ist es insbesondere vorteilhaft, dass an den Zifferblättern eigene Beleuchtungsvorrichtungen angeordnet sind, die ebenfalls in ihrer Farbe veränderbar sind, wobei die Farbe der Beleuchtung der Zifferblätter in Abhängigkeit von der Farbe der Hintergrundbeleuchtung gewählt wird, um eine gute Ablesbarkeit durch eine gut ablesbare farbliche Kombination zu ermöglichen.

Weiterhin ist vorteilhaft, in einer Speichereinheit zu Wertebereichen von Fahrtparametern jeweils die Helligkeit der verschiedenfarbigen Lichtquellen zu speichern, so dass eine Helligkeit nicht jeweils neu berechnet werden muß.

### Zeichnung

Ausführungsbeispiele der Erfindung sind in der Zeichnung dargestellt und in der nachfolgenden Beschreibung näher erläutert. Es zeigen Figur 1 ein erstes Ausführungsbeispiel für eine erfindungsgemäße Anzeigevorrichtung, Figur 2 eine Detaildarstellung der Beleuchtung der erfindungsgemäßen Anzeigevorrichtung, Figur 3 eine Seitenansicht der Beleuchtung einer erfindungsgemäßen Anzeigevorrichtung mit einer Flüssigkristallzelle, Figur 4 eine Ausführung einer erfindungsgemäßen Anzeigevorrichtung mit einer Frontbeleuchtung einer Zifferblattanzeige mit verschiedenfarbigen Lichtquellen in einer Seitenansicht, Figur 5 eine Hinterleuchtung einer erfindungsgemäßen Anzeigevorrichtung mit einer Zifferblattanzeige in einer Seitenansicht, Figur 6 eine Texturdarstellung in einer Umgebung außerhalb von Zifferblattanzeigen in einer erfindungsgemäßen Anzeigevorrichtung.

### Beschreibung des Ausführungsbeispiels

Eine erfindungsgemäße Anzeigevorrichtung kann für verschiedene Anwendungen in Fahrzeugen, z.B. in Schienenfahrzeugen, in Kraftfahrzeugen, auf Schiffen und in Flugzeugen verwendet werden. Eine Anwendung ist hierbei für alle Anzeigevorrichtungen möglich, auf denen Fahrtparameter, z.B. über die Geschwindigkeit des Fahrzeugs oder über einen Zustand des Antriebs sowie über Außenbedingungen der Fahrt, z.B. der Außentemperatur, angegeben werden. Ferner ist auch möglich, Navigationsdaten über eine derartige Anzeigevorrichtung auszugeben. Die vorliegende Erfindung wird anhand einer Anzeige vor einem Fahrer in einem Kraftfahrzeug erläutert. In einer derartigen Anzeige ist im allgemeinen eine Vielzahl von Anzeigen von Fahrtparametern zusammengefasst und werden einem Fahrer angezeigt. Die einzelnen Fahrtparameter, z.B. die Fahrzeuggeschwindigkeit, die Motordrehzahl oder ein Tankfüllstand des Kraftfahrzeugs, sind mit einzelnen Anzeigevorrichtungen, vorzugsweise Zeigerinstrumenten oder Balkenanzeigen, darstellbar. Ferner ist auch möglich, die Vielzahl von Anzeigeinstrumenten in einem Bildschirm, vorzugsweise einer Flüssigkristallzelle, in einem sogenannten frei programmierbaren Kombiinstrument darzustellen, bei dem entweder durch einen Hersteller des Fahrzeugs oder durch einen Benutzer die einzelnen Anzeigen von Fahrtparametern in ihrer Form, Größe und Darstellungsform veränderbar sind.

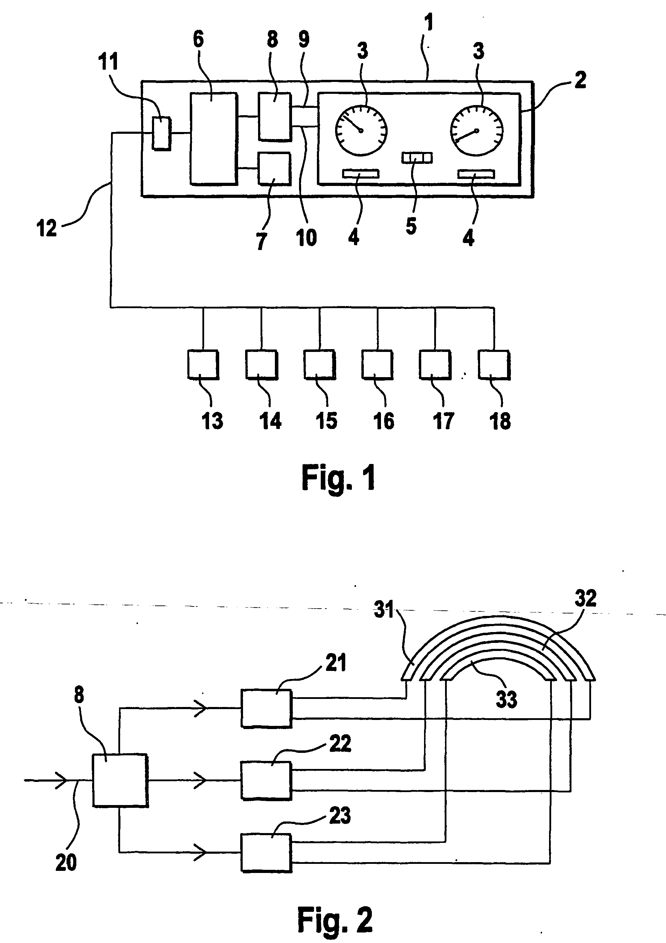

In Figur 1 ist eine Anzeigevorrichtung 1 in einem Kraftfahrzeug als ein sogenanntes Kombiinstrument dargestellt. In einer Anzeige 2 der Anzeigevorrichtung 1 sind Zeigeranzeigen 3 für Fahrzeuggeschwindigkeit und Motordrehzahl dargestellt. In Zahlenanzeigen 4 ist z.B. ein Kilometerstand des Fahrzeugs bzw. ein Tageskilometerstand dargestellt. Warnfelder 5 dienen der Anzeige von Warninformationen. Die Anzeige 2 ist als eine Flüssigkristallanzeige ausgeführt, in der die Zeigeranzeigen 3 nicht aus realen Zeigern bestehen, sondern als grafische Objekte in der Anzeige 2 angezeigt werden. Die Anzeigevorrichtung 1 verfügt ferner über eine Recheneinheit 6, eine Speichereinheit 7 und eine Steuereinheit 8, die über eine erste Datenverbindung 9 und eine zweite Datenverbindung 10 milder Anzeige 2 verbunden ist. Über eine Datenbusschnittstelle 11 ist die Anzeigevorrichtung 1 über einen Datenbus 12, der vorzugsweise als ein CAN-Bus oder als ein MOST-Bus ausgeführt ist, mit Fahrzeugsensoren verbunden. Insbesondere ist die Anzeigevorrichtung mit einem Geschwindigkeitssensor 13, einem Motordrehzahlsensor 14, einem Tankfüllstandssensor 15, einem Außentemperatursensor 16, einem Sensor für die Umgebungshelligkeit 17 und einem Abstandssensor 18 für die Messung eines Abstands zu einem vorausfahrenden Fahrzeug verbunden. Die Daten der Fahrzeugsensoren werden über den Datenbus 12 und die Datenbusschnittstelle 11 an die Recheneinheit 6 der Anzeigevorrichtung 1 weitergeleitet. Die Recheneinheit 6 bestimmt eine grafische Darstellung in der Anzeige 2 und gibt Anweisungen für die grafische Darstellung an die Steuereinheit 8 weiter. Die Steuereinheit 8 steuert die vorzugsweise als eine Flüssigkristallanzeige ausgeführte Anzeige 2 über die erste Datenverbindung 9 an, so dass über die aus einer Vielzahl von Bildpunkten bestehende Anzeige 2 eine Bilddarstellung der in der Anzeige 2 dargestellten Informationsausgaben 3, 4, 5 erfolgt. Die Recheneinheit 6 bedient sich dabei in der Speichereinheit 7 abgelegter. Grafikdaten, z.B. für die Zeigerdarstellung. Die Steuereinheit 8, die vorzugsweise ebenfalls als eine Rechenvorrichtung ausgeführt ist, bestimmt aus den von der Recheneinheit 6 übermittelten Fahrtparametern eine Ansteuerung der hinter der als Flüssigkristallanzeige ausgeführten Anzeige 2 angeordneten verschiedenfarbigen Lichtquellen. Die Beleuchtung kann in einem weiteren Ausführungsbeispiel auch als eine Frontbeleuchtung der Anzeige 2 ausgeführt sein. In einem bevorzugten Ausführungsbeispiel beleuchten die Lichtquellen in einem Standardzustand, bei dem alle Fahrtparameter sich in einem vorgegebenen Normalbereich befinden, die Anzeige mit weißem oder mit grün-blauem Licht. überschreitet jedoch die Fahrgeschwindigkeit, die Motordrehzahl, oder die Kühlwassertemperatur einen vorgegebenen Wert bzw. unterschreitet der Abstand zu einem vorausfahrenden Fahrzeug, die Außentemperatur oder der Tankfüllstand einen vorgegebenen Wert, so wird die Farbe der Anzeige zu einem roten Farbton verschoben.

In der Figur 2 ist eine Ansteuerung von verschiedenfarbigen Lichtquellen im Detail dargestellt. Aus den der Steuereinheit 8 über eine Datenverbindung 20 übermittelten Fahrtparametern wird in der Steuereinheit 8 die Ansteuerung eines ersten Inverters 21, eines zweiten Inverters 22 und eines dritten Inverters 23 bestimmt und an die Inverter 21, 22, 23 übermittelt. An die Ausgänge der Inverter 21, 22, 23 sind Kaltkathodenfluoreszenzröhren angeschlossen. An den ersten Inverter 21 ist eine erste Kaltkathodenfluoreszenzröhre 31 in blauer Farbe, an den zweiten Inverter 22 eine Kaltkathodenfluoreszenzröhre in roter Farbe und an den dritten Inverter 23 ist eine dritte Kaltkathodenfluoreszenzröhre 33 in grüner Farbe angeschlossen. Die Inverter 21, 22, 23 werden von einer in der Figur 2 nicht dargestellten Spannungsquelle, vorzugsweise einer Fahrzeugbatterie, mit einer Betriebsspannung versorgt. Die Inverter wandeln einen eingehenden Gleichstrom in einen Hochspannungswechselstrom um, der an die Kaltkathodenfluoreszenzröhren 31, 32, 33 ausgegeben wird. Die einzelnen Kaltkathodenfluoreszenzröhren sind in ihrer Helligkeit vorzugsweise durch eine Dimmung mittels Pülsweitenmodulation beeinflussbar. Die Dimmung wird über das von der Steuereinheit 8 an die Inverter 21, 22, 23 übergebene Signal festgelegt. In einem bevorzugten Ausführungsbeispiel sind die Kaltkathodenfluoreszenzröhren gekrümmt ausgeführt und befinden sich hinter der Anzeige 2. Aufgrund der höheren Effizienz der Lichtumwandlung von grünem Phosphor ist die grüne Kaltkathodenfluoreszenzlampe am kürzesten ausgeführt. Der rote Lichtanteil kann auch durch eine Neonentladungslampe an Stelle der roten Kaltkathodenfluoreszenzröhre 33 erzeugt werden. In einem in der Figur 2 nicht gezeigten Ausführungsbeispiel können anstelle der in der Figur 2 gezeigten Kaltkathodenfluoreszenzröhren auch Leuchtdioden vorzugsweise in den Farben rot, grün und blau verwendet werden. Für die Leuchtdioden kann auf eine Schaltung eines Inverters verzichtet werden und eine Ansteuerung kann direkt durch die Steuereinheit 8 erfolgen. In einem bevorzugten Ausführungsbeispiel ist die Steuereinheit 8 und die Recheneinheit 6 als ein Bauteil ausgeführt.

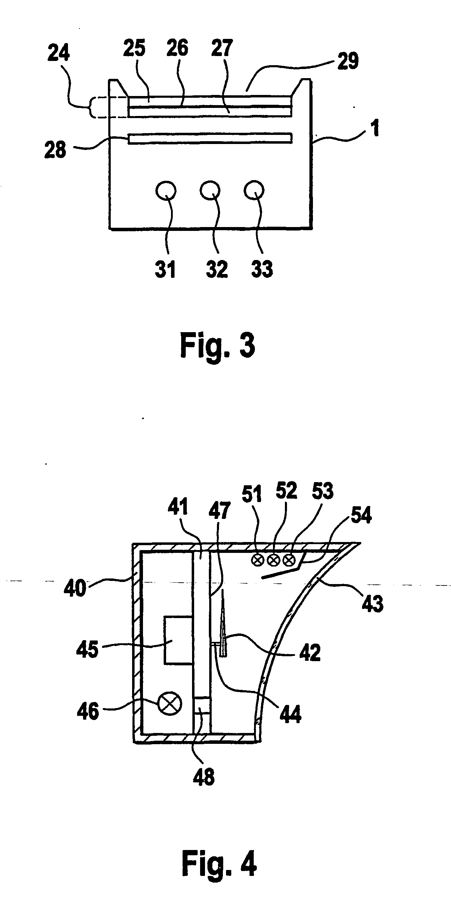

Der Figur 3 ist ein Querschnitt durch die Anzeige 2 mit der Anzeigevorrichtung 1 gemäß der Figur 1 bei einer Ausführung gemäß einer Hinterleuchtung mittels Kaltkathodenfluoreszenzröhren dargestellt, wie es zu der Figur 2 beschrieben wurde. Auf einer dem Benutzer zugewandten Öffnung 29 der Anzeigevorrichtung 1 ist eine Flüssigkristallzelle 24 bestehend aus einer ersten Glasplatte 25, einer zweiten Glasplatte 27 und einer zwischen den Glasplatten 25, 27 eingeschlossenen Flüssigkristallschicht 26 dargestellt. Die Flüssigkristallschicht 26 ist in einzelne, in der Zeichnung nicht dargestellte Bildpunkte unterteilt und über die in der Figur 3 nicht gezeigte Steuereinheit 8 ansteuerbar. Auf einer einem Betrachter der Flüssigkristallzelle 24 abgewandten Seite sind die erste, zweite und dritte Kaltkathodenfluoreszenzröhre 31, 32, 33 angeordnet. Zwischen den Kaltkathodenfluoreszenzröhren 31, 32, 33 und der Flüssigkristallzelle 24 ist eine Streuscheibe 28 angeordnet. Die Streuscheibe 28 ist vorzugsweise aus einem lichtstreuenden Kunststoffmaterial gefertigt und dient dazu, eine farblich homogene Hinterleuchtung der Flüssigkristallzelle 24 zu ermöglichen.

Statt einer Flüssigkristallzelle können bei einer erfindungsgemäßen Ausführung auch herkömmliche Zeigerinstrumente verwendet werden. In der Figur 4 ist ein Querschnitt durch eine Anzeigevorrichtung 40 in einer Seitenansicht dargestellt, bei der hinter einer transparenten Abdeckung 43 ein Zeiger 42 auf einer Zeigerwelle 44 montiert ist. Der Zeiger 42 wird über die Zeigerwelle 44 von einem Schrittmotor 45, vorzugsweise einem Schrittmotor; angetrieben und bewegt sich vor einem Zifferblatt 41, bei dem auf einer Vorderseite 47 des Zifferblattes 41 eine Skala für einen Fahrtparameter, z.B. für die Fahrzeuggeschwindigkeit, angebracht ist, z.B. durch Aufdrucken. In das Zifferblatt 41 ist ferner als ein Warnfeld ein Fenster 48 für eine Lichtquelle 46 eingebracht, wobei die Lichtquelle 46 auf einer der transparenten Abdeckung 43 abweisenden Seite des Zifferblattes 41 montiert ist. Ebenso ist der Schrittmotor 45 auf einer der transparenten Abdeckung 43 abweisenden Seite des Zifferblatts 41 angeordnet. Die Lichtquelle 46 dient der Hinterleuchtung des Warnfeldes 48, z.B. bei einer nicht geschlossenen Türe oder bei einer Fahrzeugfehlfunktion. Für eine Identifikation der Warnung ist hierzu im Warnfeld 48 vorzugsweise ein Symbol aufgedruckt. Eine Frontbeleuchtung der Vorderseite 47 mit der Skala bzw. des Zeigers 42 erfolgt durch eine erste Lichtquelle 51 in roter Farbe, eine zweite Lichtquelle 52 in blauer Farbe sowie eine dritte Lichtquelle 53 in grüner Farbe. Es erfolgt eine Beleuchtung der Vorderseite 47 des Zifferblattes 41 sowie des Zeigers 42 in Abhängigkeit von den Fahrtparametern. Unabhängig davon kann die Lichtquelle 46 das Warnfeld 48 beleuchten. In einem weiteren, in der Figur nicht dargestellten Ausführungsbeispiel ist eine zusätzliche Beleuchtung des Zeigers von einer auf der transparenten Abdeckung 43 abweisenden Seite-des Zifferblattes 41 aus möglich. Durch eine Abschattung 54 sind die Lichtquellen 51, 52, 53 für einen Benutzer nicht direkt sichtbar. Die Lichtquellen können als Glühlampen mit einem geeigneten Filter, als Leuchtdioden oder auch als Kaltkathodenfluoreszenzlampen ausgeführt sein. Eine Mischung erfolgt entweder.durch eine vor den Lichtquellen angeordnete Streuscheibe oder bei Auftreffen des Lichts auf die Vorderseite 47. In einem Ausführungsbeispiel können auch die verschiedenfarbigen Lichtquellen in einem Gehäuse integriert sein, z.B. bei mehrfarbigen Leuchtdioden, in denen mehrere, getrennt ansteuerbare lichterzeugende Elemente, vorzugsweise Halbleiterelemente, angeordnet sind. Die Schaltung der Anzeigevorrichtung 40 entspricht in einem bevorzugten Ausführungsbeispiel der Schaltung der Anzeigevorrichtung 1, wobei die Anzeigen 3, 4, 5 nicht durch eine , Flüssigkristallzelle simuliert, sondern durch entsprechende Bauteile selbst dargestellt werden.

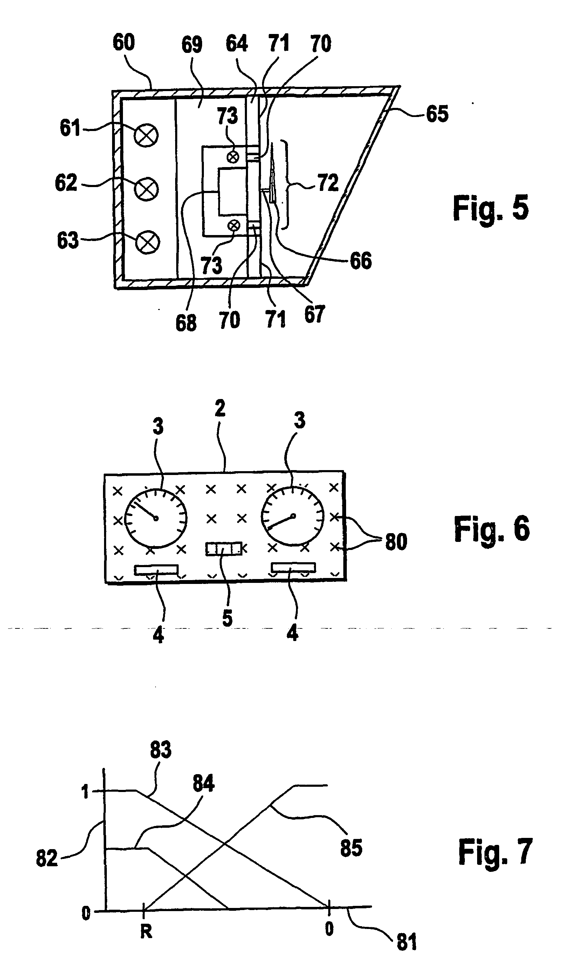

Figur 5 zeigt ein weiteres Ausführungsbeispiel der Verwendung von Zeigerinstrumenten. In der Anzeigevorrichtung 60 sind vorzugsweise stabförmige Kaltkathodenfluoreszenzlampen 61, 62, 63 angeordnet. Die erste Lichtquelle 61 ist vorzugsweise in rot, die zweite Lichtquelle 62 vorzugsweise in grün und die dritte Lichtquelle 63 vorzugsweise in blau ausgeführt. Vor den Lichtquellen 61, 62, 63 ist ein Zifferblatt 64 montiert, an dem auf einer transparenten Abdeckscheibe 65 zuweisenden Seite ein Zeiger 66 auf einer Zeigerwelle 67 angeordnet ist. Der Zeiger 66 ist über die Zeigerwelle 67 durch einen Schrittmotor 68 ansteuerbar. Licht der Lichtquellen 61, 62, 63 ist durch eine Streuscheibe 69 homogenisiert in Richtung des Zifferblattes 64 abstrahlbar. Das Zifferblatt 64 weist einen ersten Bereich 71 und einen zweiten Bereich 72 auf. In dem ersten Bereich 71 ist das Zifferblatt 64 weitgehend transparent ausgeführt, so dass das von der Streuscheibe 69 ausgehende Licht in Richtung der transparenten Abdeckung und eines vor der transparenten Abdeckung sich befindlichen Betrachters durchgelassen wird. In dem zweiten Bereich 72, der zumindest teilweise von dem Zeiger 66 überstrichen wird, ist das Zifferblatt 64 bis auf Skalenabschnitte 70 undurchlässig ausgeführt. In den Skalenabschnitten 70 ist es dagegen transparent, so dass das von Lichtquellen 73 abgestrahlte Licht, die auf einer der Abdeckscheibe 65 abgewandten Seite des Zifferblattes 64 angeordnet sind, ebenfalls zu der Abdeckscheibe 65 und eines sich davor befindenden Betrachters der Anzeige durchgelassen wird. Skalenabschnitte 70 dient gemeinsam mit dem Zeiger 66 der Darstellung eines Fahrtparameters, z.B. der Fahrzeuggeschwindigkeit und können Skalenstriche und Zahlenangaben umfassen. Der zweite Bereich 72 des Zifferblattes 64 ist einschließlich der Lichtquellen 73 und des Schrittmotors 68 durch eine Abdeckung 74, die lichtundurchlässig ist, von den übrigen, sich auf der der Abdeckscheibe 75 abgewandten Seite des Zifferblattes 64 befindlichen Bauteile getrennt. Die erfindungsgemäße farbliche Variation erfolgt nun mittels der Lichtquellen 61, 62 und 63. Die Beleuchtung des Zifferblattes durch die Lichtquellen 73 kann dabei in einem ersten Ausführungsbeispiel unverändert bleiben oder in einem zweiten Ausführungsbeispiel durch die Steuereinheit 8 ebenfalls beeinflusst werden. In einem bevorzugten Ausführungsbeispiel wird dabei die Beleuchtung des Zifferblattes durch die Lichtquellen 73 in ihrer Farbe geändert. In einem bevorzugten Ausführungsbeispiel wird die Farbe dabei gemäß der in der Norm ISO 15008 vorgeschriebenen Weise geändert, wobei die angegebene Norm Farbkombinationen vorschreibt, die eine gute Ablesbarkeit ermöglichen. Anstelle der in der Figur 5 gezeigten drei Lichtquellen unterschiedlicher Farbe können auch eine Vielzahl von stabförmigen Kaltkathodenfluoreszenzlampen eingesetzt werden, die jeweils gruppenweise entsprechend ihrer Farbe angesteuert werden. Die Verwendung von anderen, oben bereits beschriebenen Lichtquellen, z.B. Leuchtdioden, ist ebenfalls möglich.

Wird eine Flüssigkristallanzeige verwendet, kann zusätzlich zu einer Farbänderung ein grafisches Muster in einem Hintergrund neben den Anzeigen dargestellt werden. Das grafische Muster wird durch die Recheneinheit 6 berechnet bzw. in die der Recheneinheit 6 zugeordneten Speichereinheit 7 geladen und in der Anzeige 2 angezeigt. Durch dieses Muster kann z.B. ein Hinweis auf eine vereiste Fahrbahn bei einer zu niedrigen Außentemperatur oder auf Nässe bei einer durch einen Feuchtigkeitssensor ermittelten feuchten Fahrbahn angezeigt werden. In der Figur 6 wird beispielsweise die Einblendung von Schneekristallen 80 in die Anzeige 2 dargestellt, die bei einer Außentemperatur von weniger als 0° C angezeigt werden. Bei einer nassen Fahrbahn ist z.B. die Einblendung von entsprechenden Warnschildern "Rutschgefahr" oder von Wassertropfen möglich.

In der Figur 7 ist ein Beispiel für eine Festlegung der Ansteuerung von Lichtquellen in den Farben rot, grün und blau gezeigt. Für die Darstellung wurde das Beispiel eines zu niedrigen Tankstandes ausgewählt. Auf der X-Achse 81 ist ein Tankstand aufgetragen, der sich links vor der Markierung R in einem Bereich zwischen Reserve und Voll befindet. In dem Bereich zwischen R und 0 sinkt der Tankstand linear von einem Erreichen der Reserve (R) bis zu einem leeren Tank (0) ab. Auf der Y-Achse 82 ist eine Lampenansteuerung in normierten Einheiten von 0 bis 1 linear aufgetragen. "1" bedeutet eine Lampenansteuerung mit voller Helligkeit der Lampe. "0" bedeutet eine Dunkelschaltung der Lampe. Es ist eine Ansteuerungsvorschrift für eine grüne Lampe 83, eine Ansteuerungsvorschrift für eine blaue Lampe 84 und eine Ansteuerungsvorschrift für eine rote Lampe 85 dargestellt. Die in der Figur 7 dargestellte Ansteuerung ist vorzugsweise in der Speichereinheit 7 abgelegt und wird bei Erreichen eines entsprechenden Fahrparameters von der Recheneinheit 6 abgerufen. Wenn oberhalb der Reserve die blaue Lampe voll und die grüne Lampe halb angesteuert wird, sinkt mit abnehmendem Tankstand ausgehend von der Reserve die Ansteuerung der grünen Lampe 83 von der vollen Ansteuerung "1" bis zu einer Abschaltung "0" bei leerem Tank. Die blaue Lampe wird bereits bei halbem Reservestand abgeschaltet. Dagegen nimmt die Helligkeit der roten Lampe 85 kontinuierlich ausgehend von der Reserve "R" zu und erreicht etwa bei einem Viertel der Reservemenge ihre volle Helligkeit. Hierdurch wird eine Beleuchtung der Anzeige nach dem Beginn der Reserve kontinuierlich von einer blau-grünen Anzeige hin zu einer roten Anzeige verschoben, so dass einem Fahrer ein Fehler durch die Farbänderung vorzugsweise als eine Ergänzung zu einer Tankanzeige angezeigt wird.
Zusätzlich erfolgt in einem bevorzugten Ausführungsbeispiel bei einem Drittel der Reserve die Einblendung eines Warnfeldes 5 mit einem Symbol für einen leeren Tank. Die beschriebene Ansteuerung ist ohne weiteres auf andere Fahrtparameter, z.B. eine zu hohe Motordrehzahl übertragbar. Anstelle der beschriebenen Lampenkombination rot, grün und blau kann auch eine Lampenkombination in anderen Farben z.B. grün und rot, weiß und rot oder blau und rot erfolgen.

## Patentansprüche

1. Anzeigevorrichtung in einem Fahrzeug zur Anzeige einer Vielzahl von Informationen,
mit einer als eine Flüssigkristallzelle (24) ausgeführten Anzeige (2),
mit verschiedenfarbigen Lichtquellen (31, 32, 33), vorzugsweise Kaltkathodenfluoreszenzlampen, zum Hinterleuchten der Anzeige (2),
mit einer Steuereinheit (8) zum Ansteuern der verschiedenfarbigen Lichtquellen (31, 32, 33), zum Erfassen mindestens eines Fahrtparameters des Fahrzeugs, zum Auswerten des Fahrtparameters und zum Verändern einer Helligkeit der verschiedenfarbigen Lichtquellen (31, 32, 33) in Abhängigkeit von dem Fahrtparameter und '
mit einer Recheneinheit (6) zum Berechnen eines in der Anzeige (2) dargestellten Bildes mit einer Vielzahl von Informationen, vorzugsweise von Fahrtparametern.

2. Anzeigevorrichtung nach Anspruch 1, **dadurch gekennzeichnet, dass** in einer Speichereinheit (7) ein grafisches Muster in Datenform gespeichert ist und dass die Darstellung in der Anzeige (2) bei einem vorgegebenen Fahrtparameter zumindest teilweise mit dem grafischen Muster hinterlegbar ist.

3. Anzeigevorrichtung nach einem der vorhergehenden Ansprüche, **dadurch gekennzeichnet, dass** in der Anzeigevorrichtung (40, 60) eine Zeigeranzeige (3) dargestellt ist.

4. Anzeigevorrichtung nach einem der vorhergehenden Ansprüche, **dadurch gekennzeichnet, dass** die Steuereinheit (8) mit einer Speichereinheit (7) verbunden ist und dass in der Speichereinheit (7) zu Wertebereichen des Fahrtparameters eine Helligkeit der verschiedenfarbigen Lichtquellen (31, 32, 33) gespeichert ist.

5. Anzeigevorrichtung nach einem der vorhergehenden Ansprüche, **dadurch gekennzeichnet, dass** die Anzeigevorrichtung (1, 40, 60) mit mindestens einem Sensor (13, 14, 15, 16, 17, 18) zur Erfassung des Fahrtparameters verbunden ist und dass als Fahrtparameter eine Motortemperatur, eine Außentemperatur, eine Fahrzeuggeschwindigkeit, ein Fahrzeugabstand zu einem vorausfahrenden Fahrzeug, ein Ölstand, ein Kühlwasserstand und/oder ein Tankfüllstand erfassbar ist.

6. Anzeigevorrichtung nach Anspruch 5, **gekennzeichnet durch** eine Datenbusschnittstelle (11) zur Verbindung der Anzeigevorrichtung (1) mit Fahrzeugsensoren über einen Datenbus (12).

7. Anzeigevorrichtung nach einem der vorhergehenden Ansprüche, **dadurch gekennzeichnet, dass** die verschiedenfarbigen Lichtquellen (51, 52, 53) in einem Gehäuse, z.B. in einem Gehäuse einer mehrfarbigen Leuchtdiode, angeordnet sind.

## Claims

1. Display device in a vehicle for displaying a large amount of information, having a display (2) in the form of a liquid crystal cell (24), having differently coloured light sources (31, 32, 33), preferably cold-cathode fluorescent lamps, for the purpose of backlighting the display (2), having a control unit (8) for the purpose of driving the differently coloured light sources (31, 32, 33), for the purpose of detecting at least one driving parameter of the vehicle, for the purpose of evaluating the driving parameter and for the purpose of altering a brightness of the differently coloured light sources (31, 32, 33) as a function of the driving parameter, and having a computation unit (6) for the purpose of calculating an image represented in the display (2) with a large amount of information, preferably driving parameters.

2. Display device according to Claim 1, **characterized in that** a graphic pattern is stored in data form in a memory unit (7), and **in that** the representation in the display (2) given a predetermined driving parameter can be stored at least partially using the graphic pattern.

3. Display device according to one of the preceding claims, **characterized in that** a dial display (3) is represented in the display device (40, 60).

4. Display device according to one of the preceding claims, **characterized in that** the control unit (8) is connected to a memory unit (7), and **in that** a brightness for the differently coloured light sources (31, 32, 33) is stored in the memory unit (7) for value ranges of the driving parameter.

5. Display device according to one of the preceding claims, **characterized in that** the display device (1, 40, 60) is connected to at least one sensor (13, 14, 15, 16, 17, 18) for the purpose of detecting the driving parameter, and **in that** an engine temperature, an external temperature, a vehicle speed, a vehicle distance from a vehicle in front, an oil level, a coolant level and/or a tank level can be detected as driving parameters.

6. Display device according to Claim 5, **characterized by** a databus interface (11) for the purpose of connecting the display device (1) to vehicle sensors via a databus (12).

7. Display device according to one of the preceding claims, **characterized in that** the differently coloured light sources (51, 52, 53) are arranged in a housing, for example in a housing of a multicoloured light-emitting diode.

## Revendications

1. Dispositif d'affichage dans un véhicule pour l'affichage d'une multitude d'informations, comprenant :
un écran (2) constitué par une cellule à cristaux liquides (24),
des sources de lumière de différentes couleurs (31, 32, 33), de préférence des lampes fluorescentes à cathode froide, pour le rétro-éclairage de l'ensemble de l'écran (2),
une unité de commande (8) pour commander les sources de lumière de couleurs différentes (31, 32, 33), pour détecter au moins un paramètre de conduite du véhicule, pour exploiter le paramètre de conduite et pour modifier une luminosité des sources de lumière de différentes couleurs (31, 32, 33) en fonction du paramètre de conduite, et
une unité de calcul (6) pour calculer une image représentée dans l'écran (2) avec une pluralité d'informations, de préférence de paramètres de conduite.

2. Dispositif d'affichage selon la revendication 1,
**caractérisé en ce qu'**
un motif graphique est mémorisé sous forme de données dans une unité de mémoire (7) pour un paramètre de conduite prédéterminé, et la représentation dans l'écran (2) peut être doublée au moins partiellement avec le motif graphique.

3. Dispositif d'affichage selon l'une quelconque des revendications précédentes,
**caractérisé en ce qu'**
un cadran (3) est représenté dans le dispositif d'affichage (40, 60).

4. Dispositif d'affichage selon l'une quelconque des revendications précédentes,
**caractérisé en ce que**
l'unité de commande (8) est raccordée à une unité de mémoire (7), et une luminosité des sources de lumière de différentes couleurs (31, 32, 33) est mémorisée dans l'unité de mémoire (7) pour des plages de valeurs du paramètre de conduite.

5. Dispositif d'affichage selon l'une quelconque des revendications précédentes,
**caractérisé en ce que**
le dispositif d'affichage (1, 40, 60) est raccordé à au moins un détecteur (13, 14, 15, 16, 17, 18) pour la détection du paramètre de conduite, et comme paramètre de conduite on peut détecter une température du moteur, une température extérieure, une vitesse du véhicule, une distance du véhicule par rapport à un véhicule qui le précède, un niveau d'huile, un niveau de liquide de refroidissement et/ou un niveau de carburant.

6. Dispositif d'affichage selon la revendication 5,
**caractérisé par**
une interface de bus de données (11) pour le raccordement du dispositif d'affichage (1) à des détecteurs du véhicule par un bus de données (12).

7. Dispositif d'affichage selon l'une quelconque des revendications précédentes,
**caractérisé en ce que**
les sources de lumière de différentes couleurs (51, 52, 53) sont installées dans un boîtier, par exemple dans un boîtier d'une diode électroluminescente multicolore.
